# EUROPÄISCHE PATENTSCHRIFT

(11) **EP 2 754 574 B1**
(45) Veröffentlichungstag und Bekanntmachung des Hinweises auf die Patenterteilung: **12.04.2017**
(21) Anmeldenummer: 13005754.0
(22) Anmeldetag: 11.12.2013
(51) Int. Cl.: B60G 17/0185, B60G 17/016, B60G 17/015, B60W 50/029, B60W 10/22, B60W 30/02

(54) **Verfahren für die Regelung eines Vertikalregelsystems eines Fahrzeugs**
Method for controlling a vertical regulating system of a vehicle
Procédé de régulation d'un système de régulation vertical d'un véhicule

(30) Priorität: 10.01.2013 DE 102013000360
(43) Veröffentlichungstag der Anmeldung: 16.07.2014
(73) Patentinhaber: AUDI AG, 85045 Ingolstadt (DE)
(72) Erfinder: Kaltofen, Jens, DE - 85276 Pfaffenhofen (DE); Müller, Rolf, DE - 64291 Darmstadt (DE); Koch, Tilo, DE - 85055 Ingolstadt (DE); Milbredt, Paul, DE - 85055 Ingolstadt (DE)

(56) Entgegenhaltungen:
- EP-A2- 0 392 507
- WO-A1-2004/005096
- WO-A1-2009/053080
- WO-A1-2013/053468
- WO-A2-03/049981
- DE-A1- 3 841 771
- DE-A1- 10 357 922
- DE-A1- 10 361 931
- DE-A1-102008 036 772
- JP-A- 2005 119 563

## Beschreibung

Die vorliegende Erfindung betrifft ein Verfahren für die Regelung eines Vertikalregelsystems eines Fahrzeugs sowie eine Kompensationsvorrichtung für die Regelung eines Vertikalregelsystems eines Fahrzeugs.

Fahrzeuge sind bekanntermaßen mit Vertikalregelsystemen ausgestattet, um Fahrstabilität und Fahrdynamik variabel einstellen zu können. Zu Vertikalregelsystemen gehören eine Vielzahl einzelner Vertikalregelvorrichtungen, wie sie z. B. durch Luftfederregelungen, Dämpfungsregler, Niveauregler oder regelbare Wankstabilisierungen bekannt sind. Bei modernen Fahrzeugen sind häufig zwei oder sogar noch mehr solcher Vertikalregelvorrichtungen eingesetzt und in einem Vertikalregelsystem kombiniert. Beispielsweise zeigt die DE 103 61 931 A1 eine Möglichkeit der fehlertoleranten Fahrstabilitätsregelung bei welcher der Ausfall eines Aktors gemeldet werden kann. In der WO 2009/053080 A1 wird ein Verfahren beschrieben, bei welchem bei Empfang bestimmter Eingangssignale ein eingeschränkter Betrieb der Dämpferregelung vorgesehen werden kann. Auch die DE 197 16 197 A1, die EP 0 397 181 A1 und die WO 2004/005096 A1 zeigen grundsätzliche Systeme, um einzelne Komponenten einer Dämpferregelung zu kontrollieren.

Nachteilhaft bei bekannten Vertikalregelsystemen ist es, dass sie zwar nach Fehlerzuständen überwacht werden, im Fehlerzustand jedoch eine starke Beeinträchtigung der Fahrstabilität des Fahrzeugs erzeugt wird. Im schlimmsten Fall führt dies zum Liegenbleiben des Fahrzeugs, so dass mithilfe eines Abschleppfahrzeugs das defekte Fahrzeug in die nächste Werkstatt gebracht werden muss. Dies kann bereits bei Fehlern in einer einzigen Vertikalregelvorrichtung der Fall sein. Dementsprechend sind die komplex ausgebildeten Vertikalregelsysteme mit einer Vielzahl von Vertikalregelvorrichtungen deutlich fehleranfälliger, da bereits ein einziger Fehlerzustand das Risiko des Liegenbleibens des Fahrzeugs beinhaltet. Dies führt zu deutlich reduzierter Akzeptanz bei den Benutzern und darüber hinaus zu einer Erhöhung des Verkehrsrisikos, da liegengebliebene Fahrzeuge

Verkehrsfluss behindern und die Benutzer des Fahrzeugs gefährden können.

Ein relevantes Regelungssystem ist in DE10357922 beschrieben. Weiterhin offenbart die JP2005 119 563 A1 eine Kompensationsvorrichtung für die Dämpfungsregelung eines Fahrzeugs, wobei zwei Dämpfer, d.h. ein hydraulischer Dämpfer und ein elektromagnetischer Dämpfer, welche die Fahrstabilität des Fahrzeugs beeinflussen, verwendet sind. Beim Erkennen eines Fehlerzustandes einer ersten Dämpfer der zwei Dämpfer, wird der Regelparameter der zweiten Dämpfer der zwei Dämpfer zur Kompensation des Fehlerzustandes der ersten Dämpfer angepasst.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger, gewichtssparender und einfacher Weise die Weiterfahrt des Fahrzeugs auch im Fehlerfall zur Verfügung zu stellen.

Voranstehende Aufgabe wird gelöst durch ein Verfahren mit den Merkmalen des Anspruchs 1 und eine Kompensationsvorrichtung mit den Merkmalen des Anspruchs 9. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit der erfindungsgemäßen Kompensationsvorrichtung und jeweils umgekehrt, so dass bezüglich der Offenbarung zu den einzelnen Erfindungsaspekten stets wechselseitig Bezug genommen wird bzw. werden kann.

Ein erfindungsgemäßes Verfahren dient der Regelung eines Vertikalregelsystems eines Fahrzeugs mit zumindest zwei Vertikalregelvorrichtungen, welche die Fahrstabilität des Fahrzeugs beeinflussen. Ein solches erfindungsgemäßes Verfahren weist die folgenden Schritte auf:
- Überwachen der Funktionsfähigkeit der zumindest zwei Vertikalregelvorrichtungen,
- Erkennen eines Fehlerzustandes einer ersten Vertikalregelvorrichtung der zumindest zwei Vertikalregelvorrichtungen,
- Anpassen der Regelparameter mindestens einer zweiten Vertikalregelvorrichtung der zumindest zwei Vertikalregelvorrichtungen zur wenigstens teilweisen Kompensation des Fehlerzustandes der ersten Vertikalregelvorrichtung.

Ein erfindungsgemäßes Verfahren kann auch als "Nachbarschaftshilfe" bezeichnet werden. So kann hier eine Kompensation bzw. eine teilweise Kompensation innerhalb des Vertikalregelsystems erfolgen. Der Fehlerzustand eines einzelnen Teils eines Vertikalregelsystems, nämlich der Fehlerzustand einer Vertikalregelvorrichtung, kann auf diese Weise durch Anpassung anderer Vertikalregelvorrichtungen ausgeglichen oder zumindest teilweise ausgeglichen werden.

Im großen Vorteil zu bekannten Regelsystemen kann auf diese Weise das Liegenbleiben des Fahrzeugs häufig vermieden werden. Wird z. B. der Fehlerzustand in einer ersten Vertikalregelvorrichtung detektiert, so kann der Ausgleich der Auswirkung dieses Fehlers durch entsprechende Anpassung der Regelparameter einer oder mehrerer anderer Vertikalregelvorrichtungen erfolgen. Dieser Ausgleich kann die volle Funktionsfähigkeit des Fahrzeugs wiederherstellen oder zumindest Notlaufeigenschaften zur Verfügung stellen. Damit kann das Risiko des Liegenbleibens deutlich reduziert werden. Auch die Akzeptanz des Fahrers für hoch komplexe Vertikalregelsysteme wird auf diese Weise erhöht. Die Fehlertoleranz bei solcher Kompensationsmöglichkeit gemäß der vorliegenden Erfindung ist dementsprechend deutlich erhöht.

Eine Vertikalregelvorrichtung, welche die Fahrstabilität des Fahrzeugs beeinflusst, ist insbesondere auf das Fahrwerk und den Straßenkontakt ausgerichtet. So sind dies insbesondere Wankstabilisierungen, Luftfederungen oder andere einstellbare bzw. regelbare Federsysteme, Dämpferregelungen oder auch Niveauregelungen eines Fahrzeugs. Selbstverständlich können die einzelnen Vertikalregelvorrichtungen zum Teil auch kombiniert durch eine tatsächliche Bauelementkombination im Fahrzeug ausgebildet sein. Dies ist z. B. bei einer Luftfederung der Fall, die gleichzeitig die Niveauregulierung des Fahrzeugs zur Verfügung stellen kann.

Selbstverständlich kann bei einem erfindungsgemäßen Verfahren die Tatsache eines Fehlerzustandes, die Art des Fehlerzustandes und/oder die betroffene Vertikalregelvorrichtung als Warnsignal angezeigt werden. Auf diese Weise kann der Fahrer des Fahrzeugs gewarnt werden, welche Beeinträchtigung er zu erwarten hat. Auch kann er angepasst an die Art der Kompensation den weiteren Fahrtvorgang fortsetzen. Dies erhöht die Sicherheit durch den Einsatz eines erfindungsgemäßen Verfahrens beim Betrieb eines Fahrzeugs weiter.

Die Überwachung der einzelnen Vertikalregelvorrichtungen erfolgt durch bereits vorhandene Sensorvorrichtungen der jeweiligen Regeleinheit der jeweiligen Vertikalregelvorrichtung. Da für jede der einzelnen Vertikalregelvorrichtungen eine eigene Regeleinheit mit entsprechenden Sensoreinheiten zur Verfügungsstellung eines Regelkreises vorhanden ist, kann die auf diese Weise zur Verfügung stehende Informationsfülle auch für ein erfindungsgemäßes Verfahren eingesetzt werden. Dabei kann selbstverständlich die Interpretation einzelner Sensordaten hinsichtlich vertikalregelvorrichtungsübergreifender Fehlerzustände breiter bzw. anders interpretiert werden. Dementsprechend kann ein erfindungsgemäßes Verfahren auch bei bereits bestehenden Vertikalregelsystemen eingesetzt werden, insbesondere wenn auf bereits bestehende Sensorsysteme und Regeleinheiten der Vertikalregelvorrichtung zurückgegriffen wird.

Mögliche Fehlerzustände der Vertikalregelvorrichtungen hängen von jeweiligen Ausbildungsformen der Vertikalregelvorrichtungen ab. So kann z. B. bei einer Niveauregulierung der Druckabfall einen Fehlerzustand darstellen. Dies führt dazu, dass z. B. beim Ausfall des Kompressors oder bei Undichtigkeit das Fahrzeug zumindest über eine längere Betriebsdauer in den tiefsten Niveauzustand absinkt. In einem solchen Fall könnte das Risiko des Durchschlagens der Dämpfervorrichtung bzw. der Luftfedern bestehen. Andere Fehlerzustände sind defekte Ventile, Ausfälle und Undichtigkeiten von Zusatzvolumina oder Ähnlichem.

Selbstverständlich kann bei einem erfindungsgemäßen Verfahren auch die Möglichkeit gegeben sein, dass zwei oder sogar noch mehr Fehlerzustände ausgleichbar sind. Insbesondere bei Vertikalregelsystemen, die zwei, drei oder sogar noch mehr Vertikalregelvorrichtungen aufweisen, ist dies möglich.

Die Anpassung der Regelparameter bedeutet dabei die Veränderung der Sollwerte im Vergleich zu den Istwerten. So können dies andere Regelmodi, z. B. die Hoch- oder Tiefeinstellung der Niveauregelung oder ein Sport-, Normal- oder Kornfortzustand bei der Dämpfungsregelung oder der Federregelung sein. Bei der Kompensation durch eine zweite Vertikalregelvorrichtung handelt es sich insbesondere um eine noch funktionsfähige, insbesondere noch vollfunktionsfähige Vertikalregelvorrichtung. Ein erfindungsgemäßes Verfahren wird vorzugsweise durch eine Kontrolleinheit einer Kompensationsvorrichtung ausgeführt. Dementsprechend sind Kompensationsvorrichtung und Kontrolleinheit vorzugsweise ebenfalls Teil eines erfindungsgemäßen Verfahrens.

Ein erfindungsgemäßes Verfahren lässt sich dahingehend weiterbilden, dass es für die Regelung eines Vertikalregelsystems mit zumindest zwei der folgenden Vertikalregelvorrichtungen ausgebildet ist:
- Wankregelung des Fahrzeugs
- Luftfederung des Fahrzeugs
- Niveauregelung des Fahrzeugs
- Dämpfungsregelung des Fahrzeugs

Bei der voranstehenden Aufzählung handelt es sich um eine nicht abschließende Liste. Dabei kann die Wankregelung zur Stabilisierung gegen ein Aufschaukeln des Fahrzeugs um die Fahrzeuglängsachse dienen. Die Luftfederung dient einer regelbaren Federkennlinie für das Einfedern beim Befahren von Bodenwellen. Unter Niveauregelung ist die Variation der Bodenfreiheit des Fahrzeugs durch Ein- und Ausfahren der einzelnen Federsysteme zu verstehen. Die Dämpfungsregelung kann z. B. durch Fluidventile gewährleistet werden, die unterschiedliche Fluiddurchlassquerschnitte zur Verfügung stellen können, um eine Einfederdämpfung bzw. Ausfederdämpfung variieren zu können. Dabei ist die Wankregelung achsspezifisch auf ein Fahrzeug ausgelegt, während die übrigen Regelungssysteme, also die Luftfederung, die Niveauregulierung und die Dämpfungsregelung radspezifisch zur Verfügung gestellt werden.

Vorteilhaft ist es, wenn bei einem erfindungsgemäßen Verfahren beim Erkennen eines Fehlerzustandes bei einer ersten Vertikalregelvorrichtung in Form einer Wankregelung die Regelparameter einer zweiten Vertikalregelvorrichtung in Form einer Luftfederung und/oder in Form einer Dämpfungsregelung für das Erreichen einer härteren Federung oder Dämpfung angepasst werden. Fällt die Wankregelung aus, besteht grundsätzlich die Gefahr, dass ein Aufschaukeln des Fahrzeugs um seine Fahrzeuglängsachse erfolgen kann. Dieses Aufschaukeln führt zur Destabilisierung der Fahrstabilität des Fahrzeugs. Um dies zu vermeiden, werden Einflüsse auf das Fahrzeug, welche als ein Drehmoment um die Fahrzeuglängsachse einwirken, reduziert. Dies wird durch eine Verhärtung der Dämpfungscharakteristik und/oder der Federcharakteristik erzielt. So kann die Luftfederung bzw. die Dämpfungsregelung z. B. in den harten Modus bzw. in den Sportmodus geschaltet werden, wenn ein Fehlerzustand in der Wankregelung erkannt worden ist. Insbesondere erfolgt dies für sämtliche vier Räder des Fahrzeugs, um eine symmetrische Kompensation zur Verfügung stellen zu können.

Ein weiterer Vorteil wird erzielt, wenn bei einem erfindungsgemäßen Verfahren beim Erkennen eines Fehlerzustandes bei einer ersten Vertikalregelvorrichtung in Form einer Luftfederung eines Rades die Regelparameter einer zweiten Vertikalregelvorrichtung in Form einer Luftfederung eines weiteren Rades und/oder in Form einer Dämpfungsregelung für einen gleichen Federungseffekt und/oder Dämpfungseffekt wie im zugehörigen Fehlerzustand angepasst werden. Mit anderen Worten wird zumindest ein weiteres Rad, vorzugsweise derselben Achse, in den gleichen Zustand versetzt, wie das fehlerhafte Rad. Somit kann ein Achsausgleich, vorzugsweise jedoch ein Fahrzeugausgleich auf sämtliche Räder erfolgen, so dass eine Asymmetrie in der Fahrstabilität vermieden wird. Die Verschlechterung der Luftfederung, z. B. ein Verhärten durch den Verlust eines Zusatzvolumens (Verlust der Komfortvariante) führt somit zu einem automatischen Umschalten sämtlicher Luftfederungen und/oder sämtlicher Dämpfungsregelungen in einen härteren Modus. Das bedeutet, dass wieder eine symmetrische Fahrstabilitätssituation für das gesamte Fahrzeug zur Verfügung steht.

Ebenfalls von Vorteil ist es, wenn bei einem erfindungsgemäßen Verfahren beim Erkennen eines Fehlerzustandes bei einer ersten Vertikalregelvorrichtung in Form einer Niveauregelung die Regelparameter einer zweiten Vertikalregelvorrichtung in Form einer Dämpfungsregelung an eine härtere Dämpfung zum Vermeiden eines zu tiefen Eintauchens der Luftfederung angepasst werden. Fällt die Niveauregelung aus, so ist dies z. B. die Undichtigkeit des Niveauregelsystems oder der Ausfall des Kompressors. Unabhängig von der tatsächlichen Ursache führt dies zu einem Absinken des Fahrzeugs in den tiefsten Niveauzustand. Dies führt darüber hinaus automatisch zu reduzierten Eintauchtiefen für den Federweg in der Luftfederung. Um nun bei hochdynamischen Fahrsituationen ein zu tiefes Eintauchen und dementsprechend das Beschädigungsrisiko der Luftfederung zu vermeiden, wird die Dämpfungsregelung verhärtet, z. B. in den Sportmodus versetzt. Damit wird durch die verstärkte Dämpfung ein zu tiefes Eintauchen und dementsprechend das Beschädigungsrisiko der Luftfederung verhindert.

Ein weiterer Vorteil kann erzielt werden, wenn bei einem erfindungsgemäßen Verfahren beim Erkennen eines Fehlerzustandes bei einer ersten Vertikalregelvorrichtung in Form einer Dämpfungsregelung die Regelparameter einer zweiten Vertikalregelvorrichtung in Form einer Niveauregelung auf Normalniveau angepasst werden. Mit anderen Worten kann beim Verklemmen einer Regulierfunktion eines Fluidventils in einer Dämpfungsregelung die Niveauregulierung auf einen Mittelwert, also auf Normalniveau angepasst werden. Dies ist der für die Fahrstabilität günstigste Kompromiss, um die Weiterfahrt möglichst sicher zu gewährleisten.

Ebenfalls von Vorteil kann es sein, wenn bei einem erfindungsgemäßen Verfahren nach dem Erkennen des Fehlerzustandes dieser als Warnsignal dem Fahrer im Fahrzeug angezeigt wird. Die Anzeige kann in optischer, akustischer, taktiler oder auf andere Weise sensorisch vom Fahrer wahrnehmbarer Art erfolgen. Z. B. kann eine Warnleuchte im Display des Fahrzeugs den Fehlerzustand anzeigen. Die Anzeige erfolgt dabei vorzugsweise spezifisch auf die jeweilige Vertikalregelvorrichtung und/oder auf jeweilige Art des Fehlers. Insbesondere wird dabei auch der Grad der Beeinträchtigung angezeigt. Besonders bevorzugt ist es, wenn dem Warnsignal darüber hinaus für den Fahrer eine Information zu entnehmen ist, welche ihm einen Hinweis auf die Art der Kompensation und die damit einhergehende Beeinträchtigung der Fahrstabilität beinhaltet. Mit anderen Worten wird nach dem Erkennen des Fehlerzustandes die Art der Kompensation und die dementsprechende Notlaufsituation für den Fahrer angezeigt. Dies erhöht die Sicherheit beim Weiterbetrieb des Fahrzeugs beim erkannten Fehlerzustand weiter.

Ebenfalls vorteilhaft ist es, wenn bei einem erfindungsgemäßen Verfahren auf Basis des erkannten Fehlerzustandes und der Anpassung der Regelparameter ein Eingriff in die Regelung des Fahrzeugs erfolgt. Hier wird neben einer möglichen Warnsignalisierung des Fahrers aktiv in die Regelung des Fahrzeugs eingegriffen. So kann beispielsweise die Bremskraft automatisch verstärkt werden, die Antriebsleistung automatisch gedrosselt werden oder ähnliche Eingriffe in die Fahrzeugregelung durchgeführt werden. Auch eine Variation des maximal möglichen Lenkeinschlages ist möglich, um z. B. das Anschlagen der Räder im Radkasten bei einem Fehlerzustand der Niveauregulierung zu vermeiden. Damit kann die Sicherheit beim Weiterbetrieb des Fahrzeugs nach dem Erkennen des Fehlerzustandes ebenfalls noch erhöht werden.

Ebenfalls Gegenstand der vorliegenden Erfindung ist eine Kompensationsvorrichtung für die Regelung eines Vertikalregelsystems eines Fahrzeugs mit zumindest zwei Vertikalregelvorrichtungen. Diese beeinflussen die Fahrstabilität des Fahrzeugs. Die Kompensationsvorrichtung weist zumindest eine Kontrolleinheit auf, welche ausgebildet ist für die Überwachung der Funktionsfähigkeit der zumindest zwei Vertikalregelvorrichtungen, das Erkennen eines Fehlerzustandes einer ersten Vertikalregelvorrichtung der zumindest zwei Vertikalregelvorrichtungen und das Anpassen der Regelparameter einer zweiten Vertikalregelvorrichtung der zumindest zwei Vertikalregelvorrichtungen zur wenigstens teilweisen Kompensation des Fehlerzustandes der ersten Vertikalregelvorrichtung. Die Kontrolleinheit ist vorzugsweise ausgebildet für die Ausführung eines erfindungsgemäßen Verfahrens. Dementsprechend bringt eine erfindungsgemäße Kompensationsvorrichtung die gleichen Vorteile mit sich, wie sie ausführlich mit Bezug auf ein erfindungsgemäßes Verfahren erläutert worden sind.

Weitere Vorteile, Merkmale und Einzelheiten der Erfindung ergeben sich aus der nachfolgenden Beschreibung, in der unter Bezugnahme auf die Zeichnung Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigt schematisch:

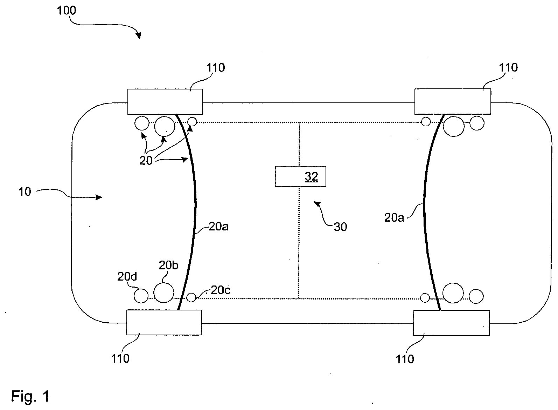

- Fig. 1: eine Übersichtsdarstellung eines Vertikalregelsystems

Fig. 1 zeigt ein Fahrzeug 100, in dem eine erfindungsgemäße Kompensationsvorrichtung 30 angeordnet ist. Das Fahrzeug 100 weist ein Vertikalregelsystem 10 mit vier unterschiedlichen Vertikalregelvorrichtungen 20 auf. Über die beiden Achsen, also die Vorderachse und die Hinterachse, ist jeweils eine Wankstabilisierung 20a vorgesehen. Diese verbindet die beiden Räder links und rechts miteinander, um dementsprechend ausgleichend auf ein Wanken des Fahrzeugs um die Fahrzeuglängsachse einwirken zu können.

Weiter ist an jedem Rad 110 eine Luftfederung 20b, eine Niveauregelung 20c und eine Dämpfungsregelung 20d vorgesehen. Auch wenn diese Vertikalregelvorrichtungen 20 hier separat voneinander dargestellt sind, können sie selbstverständlich kombiniert in einem einzigen Bauelement, z. B. als Federdämpferkombination eingesetzt sein.

Bei der Ausführungsform, wie sie die Fig. 1 zeigt, weist die Kompensationsvorrichtung 30 eine Kontrolleinheit 32 auf, welche signalkommunizierend mit sämtlichen Vertikalregelvorrichtungen 20 des Vertikalregelsystems 10 verbunden ist. Damit können Fehlerzustände der einzelnen Vertikalregelvorrichtungen 20 erkannt und an die Kontrolleinheit 32 weitergeleitet werden. Auf Basis erkannter Fehlerzustände können Regelparameter und damit Sollwerte der noch intakten bzw. noch funktionsfähigen weiteren Vertikalregelvorrichtungen 20 verändert und angepasst werden. Ziel dieser Anpassung ist die erfindungsgemäße zumindest teilweise Kompensation dieses Fehlerzustandes, um die Weiterfahrt des Fahrzeugs zumindest bis zur nächsten Werkstatt gewährleisten zu können.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Vertikalregelsystem
- 20: Vertikalregelvorrichtung
- 20a: Wankregelung
- 20b: Luftfederung
- 20c: Niveauregelung
- 20d: Dämpfungsregelung
- 30: Kompensationsvorrichtung
- 32: Kontrolleinheit
- 100: Fahrzeug
- 110: Rad

## Patentansprüche

1. Verfahren für die Regelung eines Vertikalregelsystems (10) eines Fahrzeugs (100) mit zumindest zwei Vertikalregelvorrichtungen (20), welche die Fahrstabilität des Fahrzeugs (100) beeinflussen, aufweisend die folgenden Schritte:
- Überwachen der Funktionsfähigkeit der zumindest zwei Vertikalregelvorrichtungen (20) mittels Sensorvorrichtungen der jeweiligen Regeleinheit der jeweiligen Vertikalregelvorrichtung (20),
- Erkennen eines Fehlerzustandes einer ersten Vertikalregelvorrichtung der zumindest zwei Vertikalregelvorrichtungen (20),
- Anpassen der Regelparameter mindestens einer zweiten Vertikalregelvorrichtung der zumindest zwei Vertikalregelvorrichtungen (20) zur wenigstens teilweisen Kompensation des Fehlerzustandes der ersten Vertikalregelvorrichtung.

2. Verfahren nach Anspruch 1, **dadurch gekennzeichnet, dass** es für die Regelung eines Vertikalregelsystems (10) mit zumindest zwei der folgenden Vertikalregelvorrichtungen (20) ausgebildet ist:
- Wankregelung (20a) des Fahrzeugs (100)
- Luftfederung (20b) des Fahrzeugs (100)
- Niveauregelung (20c) des Fahrzeugs (100)
- Dämpfungsregelung (20d) des Fahrzeugs (100)

3. Verfahren nach einem der vorangegangenen Ansprüche, **dadurch gekennzeichnet, dass** beim Erkennen eines Fehlerzustandes bei einer ersten Vertikalregelvorrichtung in Form einer Wankregelung (20a) die Regelparameter einer zweiten Vertikalregelvorrichtung in Form einer Luftfederung (20b) und/oder in Form einer Dämpfungsregelung (20d) für das Erreichen einer härteren Federung und/oder Dämpfung angepasst werden.

4. Verfahren nach einem der vorangegangenen Ansprüche, **dadurch gekennzeichnet, dass** beim Erkennen eines Fehlerzustandes bei einer ersten Vertikalregelvorrichtung in Form einer Luftfederung (20b) eines Rades (110) die Regelparameter einer zweiten Vertikalregelvorrichtung in Form einer Luftfederung (20b) eines weiteren Rades (110) und/oder in Form einer Dämpfungsregelung (20d) für einen gleichen Federungseffekt und/oder Dämpfungseffekt wie im zugehörigen Fehlerzustand angepasst werden.

5. Verfahren nach einem der vorangegangenen Ansprüche, **dadurch gekennzeichnet, dass** beim Erkennen eines Fehlerzustandes bei einer ersten Vertikalregelvorrichtung in Form einer Niveauregelung (20c) die Regelparameter einer zweiten Vertikalregelvorrichtung in Form einer Dämpfungsregelung (20d) an eine härtere Dämpfung zum Vermeiden eines zu tiefen Eintauchens der Luftfederung (20b) angepasst werden.

6. Verfahren nach einem der vorangegangenen Ansprüche, **dadurch gekennzeichnet, dass** beim Erkennen eines Fehlerzustandes bei einer ersten Vertikalregelvorrichtung in Form einer Dämpfungsregelung (20d) die Regelparameter einer zweiten Vertikalregelvorrichtung in Form einer Niveauregelung (20c) auf Normalniveau angepasst werden.

7. Verfahren nach einem der vorangegangenen Ansprüche, **dadurch gekennzeichnet, dass** nach dem Erkennen des Fehlerzustandes dieser als Warnsignal dem Fahrer des Fahrzeugs (100) angezeigt wird.

8. Verfahren nach einem der vorangegangenen Ansprüche, **dadurch gekennzeichnet, dass** auf Basis des erkannten Fehlerzustandes und der Anpassung der Regelparameter ein Eingriff in die Regelung des Fahrzeugs (100) erfolgt.

9. Kompensationsvorrichtung (30) für die Regelung eines Vertikalregelsystems (10) eines Fahrzeugs (100) mit zumindest zwei Vertikalregelvorrichtungen (20), welche die Fahrstabilität des Fahrzeugs (10) beeinflussen, aufweisend zumindest eine Kontrolleinheit (32), welche ausgebildet ist für die Überwachung der Funktionsfähigkeit der zumindest zwei Vertikalregelvorrichtungen (20) mittels Sensorvorrichtungen der jeweiligen Regeleinheit der jeweiligen Vertikalregelvorrichtung (20), das Erkennen eines Fehlerzustandes einer ersten Vertikalregelvorrichtung der zumindest zwei Vertikalregelvorrichtungen (20) und das Anpassen der Regelparameter einer zweiten Vertikalregelvorrichtung der zumindest zwei Vertikalregelvorrichtungen (20) zur wenigstens teilweisen Kompensation des Fehlerzustandes der ersten Vertikalregelvorrichtung.

10. Kompensationsvorrichtung (30) nach Anspruch 9, **dadurch gekennzeichnet, dass** die Kontrolleinheit (32) für die Ausführung eines Verfahrens mit den Merkmalen eines der Ansprüche 1 bis 8 ausgebildet ist.

## Claims

1. Method for regulating a vertical regulating system (10) of a vehicle (100) having at least two vertical regulating devices (20), which influence the driving stability of the vehicle (100), comprising the following steps:
- monitoring the functional capability of the at least two vertical regulating devices (20) by means of sensor devices of the respective regulating unit of the respective vertical regulating device (20),
- detecting an error state of a first vertical regulating device of the at least two vertical regulating devices (20),
- adapting the regulating parameters of at least a second vertical regulating device of the at least two vertical regulating devices (20) to at least partially compensate for the error state of the first vertical regulating device.

2. Method according to Claim 1, **characterised in that** it is configured to regulate a vertical regulating system (10) having at least two of the following vertical regulating devices (20):
- roll regulation (20a) of the vehicle (100)
- air suspension (20b) of the vehicle (100)
- level regulation (20c) of the vehicle (100)
- damping regulation (20d) of the vehicle (100).

3. Method according to any one of the preceding claims, **characterised in that**, in the event of detection of an error state in a first vertical regulating device in the form of roll regulation (20a), the regulating parameters of a second vertical regulating device in the form of air suspension (20b) and/or in the form of damping regulation (20d) are adapted in order to achieve a harder suspension and/or damping.

4. Method according to any one of the preceding claims, **characterised in that**, in the event of detection of an error state in a first vertical regulating device in the form of air suspension (20b) of a wheel (110), the regulating parameters of a second vertical regulating device in the form of air suspension (20b) of a further wheel (110) and/or in the form of damping regulation (20d) are adapted for the same suspension effect and/or damping effect as in the associated error state.

5. Method according to any one of the preceding claims, **characterised in that**, in the event of detection of an error state in a first vertical regulating device in the form of level regulation (20c), the regulating parameters of a second vertical regulating device in the form of damping regulation (20d) are adapted to harder damping in order to avoid excessively deep insertion of the air suspension (20b).

6. Method according to any one of the preceding claims, **characterised in that**, in the event of detection of an error state in a first vertical regulating device in the form of damping regulation (20d), the regulating parameters of a second vertical regulating device in the form of level regulation (20c) are adapted to a normal level.

7. Method according to any one of the preceding claims, **characterised in that**, after detection of the error state, the latter is displayed as a warning signal to the driver of the vehicle (100).

8. Method according to any one of the preceding claims, **characterised in that** intervention in the regulation of the vehicle (100) is carried out on the basis of the detected error state and the adaptation of the regulating parameters.

9. Compensation device (30) regulating a vertical regulating system (10) of a vehicle (100) having at least two vertical regulating devices (20), which influence the driving stability of the vehicle (10), having at least one control unit (32) which is configured to monitor the functional capability of the at least two vertical regulating devices (20) by means of sensor devices of the respective regulating unit of the respective vertical regulating device (20), to detect an error state of a first vertical regulating device of the at least two vertical regulating devices (20), and to adapt the regulating parameters of a second vertical regulating device of the at least two vertical regulating devices (20) in order to at least partially compensate for the error state of the first vertical regulating device.

10. Compensation device (30) according to Claim 9, **characterised in that** the control unit (32) is configured to carry out a method having the features of one of Claims 1 to 8.

## Revendications

1. Procédé pour régler un système de réglage vertical (10) d'un véhicule (100) avec au moins deux dispositifs de réglage vertical (20) qui influencent la stabilité de conduite du véhicule (100), comportant les étapes suivantes :
- surveillance de la capacité de fonctionnement des au moins deux dispositifs de réglage vertical (20) au moyen de dispositifs capteurs de l'unité de réglage respective du dispositif de réglage vertical (20) respectif,
- détection d'un état défectueux d'un premier dispositif de réglage vertical des au moins deux dispositifs de réglage vertical (20),
- adaptation des paramètres de réglage d'au moins un deuxième dispositif de réglage vertical des au moins deux dispositifs de réglage vertical (20) afin de compenser au moins partiellement l'état défectueux du premier dispositif de réglage vertical.

2. Procédé selon la revendication 1, **caractérisé en ce qu'**il est conçu pour régler un système de réglage vertical (10) avec au moins deux des dispositifs de réglage vertical (20) suivants :
- réglage de roulis (20a) du véhicule (100)
- suspension pneumatique (20b) du véhicule (100)
- réglage de niveau (20c) du véhicule (100)
- réglage d'amortissement (20d) du véhicule (100)

3. Procédé selon l'une des revendications précédentes, **caractérisé en ce que**, lors de la détection d'un état défectueux au niveau d'un premier dispositif de réglage vertical conçu sous la forme d'un réglage de roulis (20a), les paramètres de réglage d'un deuxième dispositif de réglage vertical conçu sous la forme d'une suspension pneumatique (20b) et/ou sous la forme d'un réglage d'amortissement (20d) sont adaptés pour atteindre une suspension plus dure et/ou un amortissement plus dur.

4. Procédé selon l'une des revendications précédentes, **caractérisé en ce que**, lors de la détection d'un état défectueux au niveau d'un premier dispositif de réglage vertical conçu sous la forme d'une suspension pneumatique (20b) d'une roue (110), les paramètres de réglage d'un deuxième dispositif de réglage vertical conçu sous la forme d'une suspension pneumatique (20b) d'une autre roue (110) et/ou sous la forme d'un réglage d'amortissement (20d) sont adaptés pour obtenir un effet de suspension et/ou d'amortissement identique à celui de l'état défectueux associé.

5. Procédé selon l'une des revendications précédentes, **caractérisé en ce que**, lors de la détection d'un état défectueux au niveau d'un premier dispositif de réglage vertical conçu sous la forme d'un réglage de niveau (20c), les paramètres de réglage d'un deuxième dispositif de réglage vertical conçu sous la forme d'un réglage d'amortissement (20d) sont adaptés à un amortissement plus dur pour éviter un enfoncement trop profond de la suspension pneumatique (20b).

6. Procédé selon l'une des revendications précédentes, **caractérisé en ce que**, lors de la détection d'un état défectueux au niveau d'un premier dispositif de réglage vertical conçu sous la forme d'un réglage d'amortissement (20d), les paramètres de réglage d'un deuxième dispositif de réglage vertical conçu sous la forme d'un réglage de niveau (20c) sont adaptés pour avoir un niveau normal.

7. Procédé selon l'une des revendications précédentes, **caractérisé en ce que**, après la détection de l'état défectueux, celui-ci est indiqué sous forme de signal d'avertissement au conducteur du véhicule (100).

8. Procédé selon l'une des revendications précédentes, **caractérisé en ce que**, sur la base de l'état défectueux détecté et de l'adaptation des paramètres de réglage, une intervention s'effectue dans le réglage du véhicule (100).

9. Dispositif de compensation (30) pour régler un système de réglage vertical (10) d'un véhicule (100) avec au moins deux dispositifs de réglage vertical (20), qui influencent la stabilité de conduite du véhicule (10), comportant au moins une unité de contrôle (32) qui est conçue pour la surveillance de la capacité de fonctionnement des au moins deux dispositifs de réglage vertical (20) au moyen de dispositifs capteurs de l'unité de réglage respective du dispositif de réglage vertical (20) respectif, pour la détection d'un état défectueux d'un premier dispositif de réglage vertical des au moins deux dispositifs de réglage vertical (20) et pour l'adaptation des paramètres de réglage d'au moins un deuxième dispositif de réglage vertical des au moins deux dispositifs de réglage vertical (20) afin de compenser au moins partiellement l'état défectueux du premier dispositif de réglage vertical.

10. Dispositif de compensation (30) selon la revendication 9, **caractérisé en ce que** l'unité de contrôle (32) est conçue pour exécuter un procédé ayant les caractéristiques de l'une des revendications 1 à 8.
